# EUROPEAN PATENT SPECIFICATION

(11) **EP 3 995 376 B1**
(45) Date of publication and mention of the grant of the patent: **08.03.2023**
(21) Application number: 21202761.9
(22) Date of filing: 14.10.2021
(51) Int. Cl.: B60W 20/50, B60W 10/08

(54) **CONTROL DEVICE FOR HYBRID VEHICLE**
STEUERUNGSVORRICHTUNG FÜR HYBRIDFAHRZEUG
DISPOSITIF DE COMMANDE POUR VÉHICULE HYBRIDE

(30) Priority: 10.11.2020 JP 2020187171
(43) Date of publication of application: 11.05.2022
(73) Proprietor: Suzuki Motor Corporation, Shizuoka 432-8611 (JP)
(72) Inventor: Sato, Yuki, Shizuoka 432-8611 (JP); Okabe, Masaaki, Shizuoka 432-8611 (JP)
(74) Representative: Henkel & Partner mbB

(56) References cited:
- EP-A1- 2 133 251
- WO-A1-2017/194047
- US-A1- 2018 148 039
- US-A1- 2018 290 659

## Description

### [Technical Field]

The present invention relates to a control device for a hybrid vehicle.

### [Background Art]

Patent Literature 1 discloses a technique that reduces torque of a motor when the motor is locked in slope climbing to thereby release a lock state and prevent damage to a switching element.

Patent Literature 2 is directed to solve the problem of generation of overdischarging from a power storage device according to compensation for reduction in electrical power generated by an MG1 corresponding to reduction in the revolution speed of the MG1. When detection is made of reduction in the revolution speed of the MG1 corresponding to reduction in the engine speed, any of the four following operations is carried out: (1) modifying the output torque of the MG1 such that electrical power generated by the MG1 increases; (2) modifying the output torque of an MG2 such that power consumption by the MG2 is reduced; (3) forcing the control mode of the MG1 to be changed to PWM control from one-pulse switching control; and (4) reducing the DC voltage command value for the converter.

### [Citation List]

### [Patent Literature]

[Patent Literature 1] JPH11-215687A
[Patent Literature 2] EP 2 133 251 A1

### [Summary of Invention]

### [Technical Problem]

According to Patent Literature 1, a motor is determined to be in a lock state when a rotation speed of the motor is less than a first predetermined rotation speed of the motor and a motor torque command value is greater than a predetermined torque value.

However, if a motor lock is determined when the vehicle is suddenly decelerated while the motor torque command value is high and the rotation speed of the motor decreases, the temperature of the switching element suddenly rises so that torque reduction control may not work in time.

It is therefore an objective of the present invention to provide a control device for a hybrid vehicle that can protect a switching element from a sudden temperature rise even when the vehicle speed suddenly decreases.

### [Solution to Problem]

In order to solve the above-described problem, there is provided a control device for a hybrid vehicle as set out in independent claim 1.

### [Advantageous Effect of Invention]

Thus, according to the present invention, it is possible to protect the switching element from a sudden temperature rise even when the vehicle speed suddenly decreases.

### [Brief Description of Drawings]

[Figure 1] Figure 1 is a schematic configuration diagram of a hybrid vehicle according to an embodiment of the present invention.
[Figure 2] Figure 2 is a flowchart illustrating a procedure of a motor output control process of a control device for a hybrid vehicle according to the embodiment of the present invention.
[Figure 3] Figure 3 is a time chart illustrating a change in a rotation speed filtered by the motor output control process of the control device for a hybrid vehicle according to the embodiment of the present invention.

### [Description of Embodiment]

A control device for a hybrid vehicle according to one embodiment of the present invention is a control device for a hybrid vehicle including an engine, a motor, an inverter that supplies AC electric power to the motor using a switching element, and a rotation speed detection unit that detects a rotation speed of the motor, the control device including a control unit that restricts torque of the motor when it is detected that the rotation speed of the motor decreases by a predetermined rate of change or more.

Thus, the control device for a hybrid vehicle according to the embodiment of the present invention can protect a switching element from a sudden temperature rise even when the vehicle speed suddenly decreases.

### [Embodiment]

Hereinafter, a hybrid vehicle equipped with a control device according to an embodiment of the present invention will be described in detail with reference to the accompanying drawings.

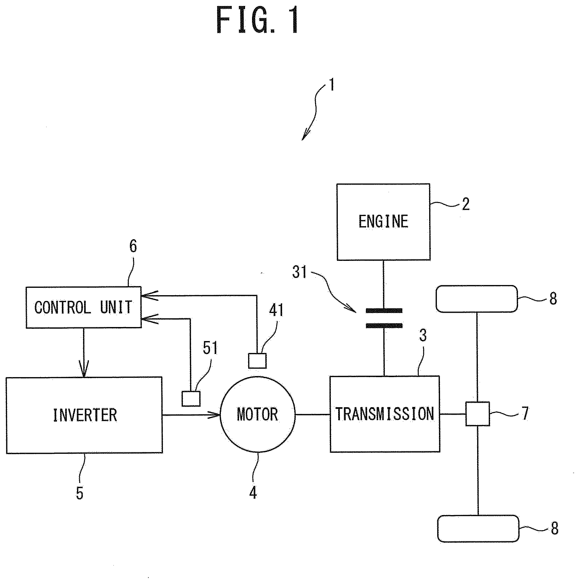

In Figure 1, a hybrid vehicle 1 according to an embodiment of the present invention includes an engine 2, a transmission 3, a motor 4, an inverter 5, and a control unit 6.

A plurality of cylinders are formed in the engine 2. In the present embodiment, the engine 2 is configured to perform a series of four strokes: intake stroke, compression stroke, expansion stroke, and exhaust stroke, on each cylinder.

The transmission 3 shifts the rotation output from the engine 2 and drives left and right driving wheels 8 via a differential 7. The transmission 3 is provided with a constant mesh transmission mechanism (not shown) made up of a parallel shaft gear mechanism and an actuator (not shown).

A dry type single plate clutch 31 is provided between the engine 2 and the transmission 3, and the clutch 31 connects or disconnects power transmission between the engine 2 and the transmission 3.

The transmission 3 is constructed as a so-called AMT (automated manual transmission), and gear shift in the transmission mechanism and engagement/disengagement of the clutch 31 are performed by an actuator (not shown).

The motor 4 has a function as an electric motor driven by electric power supplied from a battery (not shown) via the inverter 5 and a function as a generator that regenerates power by reverse driving force input from the differential 7. An output shaft of the motor 4 is connected to an output shaft of the transmission 3.

The motor 4 is provided with a rotation sensor 41 as a rotation speed detection unit that detects a rotation speed of the motor 4. The rotation sensor 41 is connected to the control unit 6.

The inverter 5 converts DC electric power supplied from a battery under control of the control unit 6 to three-phase AC electric power and supplies the AC electric power to the motor 4 or converts three-phase AC electric power generated by the motor 4 to DC electric power and charges the battery.

The inverter 5 is provided with, for example, six switching elements to control three-phase AC electric power to be supplied to the motor 4 by controlling the six switching elements.

The inverter 5 is provided with a current sensor 51 that detects a current supplied from the inverter 5 to the motor 4. The current sensor 51 is connected to the control unit 6.

The control unit 6 is constructed of a computer unit provided with a CPU (central processing unit), RAM (random access memory), ROM (read only memory), a flash memory that saves backup data or the like, an input port, and an output port.

The ROM of the computer unit stores various constants and various maps or the like, and a program to cause the computer unit to function as the control unit 6.

That is, the CPU executes the program stored in the ROM using the RAM as a work area, and the computer unit thereby functions as the control unit 6 according to the present embodiment.

Various sensors including the aforementioned rotation sensor 41 and current sensor 51 are connected to an input port of the control unit 6.

On the other hand, in addition to the aforementioned inverter 5 and the actuator of the transmission 3, various control targets including an injector (not shown) are connected to an output port of the control unit 6.

In the present embodiment, when it is detected that the rotation speed of the motor 4 decreases by a predetermined rate of change or more, the control unit 6 restricts the torque of the motor 4. Restricting the torque of the motor 4 means, for example, lowering an upper limit value of the motor torque.

The control unit 6 includes, for example, a filter to correct the rotation speed of the motor 4 and restricts the torque of the motor 4 when a difference between the rotation speed of the motor 4 and the value of the rotation speed of the motor 4 corrected by the filter is equal to or greater than a predetermined value.

The control unit 6 includes, for example, a first filter and a second filter that is less responsive than the first filter and restricts the torque of the motor 4 when an amount of change in the rotation speed of the motor, which is a difference between the value of the rotation speed of the motor 4 corrected by the first filter and the value of the rotation speed of the motor 4 corrected by the second filter, is equal to or greater than a predetermined determination threshold.

The first filter and the second filter have different cutoff frequencies, and, for example, the first filter has a greater cutoff frequency and a smaller time constant.

For example, the first filter is a filter that changes at substantially the same speed as the speed of an angle sensor used for motor torque control and is used for motor lock determination or the like.

The control unit 6 determines whether an amount of change in the rotation speed of the motor is equal to or greater than a determination threshold, for example, when a predetermined determination condition is met.

Examples of the determination condition include: that the rotation speed of the motor 4 is equal to or less than a predetermined rotation speed of the motor; and that the torque of the motor 4 is equal to or greater than predetermined motor torque, all of which are assumed to have been met as the determination condition.

When, for example, a predetermined determination condition is met and a state in which an amount of change in the rotation speed of the motor is equal to or greater than a determination threshold continues for a predetermined time period, the control unit 6 restricts the torque of the motor 4.

When, for example, a predetermined restoration condition is met, the control unit 6 releases the restriction on the torque of the motor 4.

Examples of the restoration condition include: that the rotation speed of the motor 4 is equal to or greater than a predetermined restoration rotation speed; that the torque of the motor 4 is equal to or less than predetermined restoration torque; and that the amount of change in the rotation speed of the motor is equal to or less than a predetermined restoration threshold, any one of, or a combination of some of these conditions, all of which are assumed to have been met as the restoration condition.

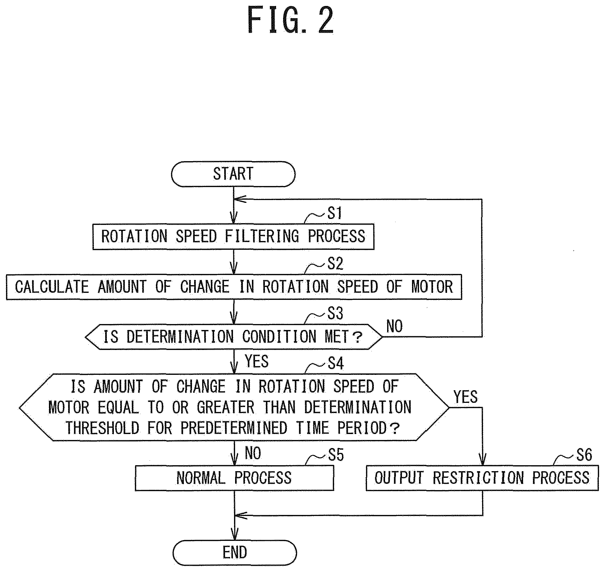

A motor output control process by the control device for a hybrid vehicle according to the present embodiment configured as described above will be described hereinafter with reference to Figure 2. Note that the motor output control process described hereinafter starts when the control unit 6 starts operation and is executed at preset time intervals.

In step S1, the control unit 6 filters the rotation speed of the motor 4 using two filters with different responsiveness. After executing the process in step S1, the control unit 6 executes a process in step S2.

In step S2, the control unit 6 calculates the absolute value of a value obtained by subtracting the value of the rotation speed of the motor 4 filtered by the filter with quick responsiveness from the value of the rotation speed of the motor 4 filtered by the filter with slow responsiveness as an amount of change in the rotation speed of the motor. After executing the process in step S2, the control unit 6 executes a process in step S3.

By taking the absolute value as the difference in the filter value, it is possible to correctly calculate an amount of change in the rotation speed of the motor even when the motor 4 changes from forward rotation to reverse rotation or from reverse rotation to forward rotation, and respond to both an incremental direction and a decremental direction of the rotation speed of the motor. Therefore, it is possible to respond to a sudden change in the rotation speed of the motor during a tire lock or wheel spin caused in relation to the system structure.

In step S3, the control unit 6 determines whether or not the aforementioned determination condition is met. When it is determined that the determination condition is met, the control unit 6 executes a process in step S4.

When it is determined that the determination condition is not met, the control unit 6 executes the process in step S1.

In step S4, the control unit 6 determines whether or not the amount of change in the rotation speed of the motor has been equal to or greater than a determination threshold for a predetermined time period. When it is determined that the amount of change in the rotation speed of the motor has been equal to or greater than the determination threshold for the predetermined time period, the control unit 6 executes a process in step S6.

When it is determined that the amount of change in the rotation speed of the motor has not been equal to or greater than the determination threshold for the predetermined time period, the control unit 6 executes the process in step S5.

In step S5, the control unit 6 controls the motor 4 in a normal process. After executing the process in step S5, the control unit 6 ends the motor output control process.

In step S6, the control unit 6 controls the motor 4 in an output restriction process. After executing the process in step S6, the control unit 6 ends the motor output control process.

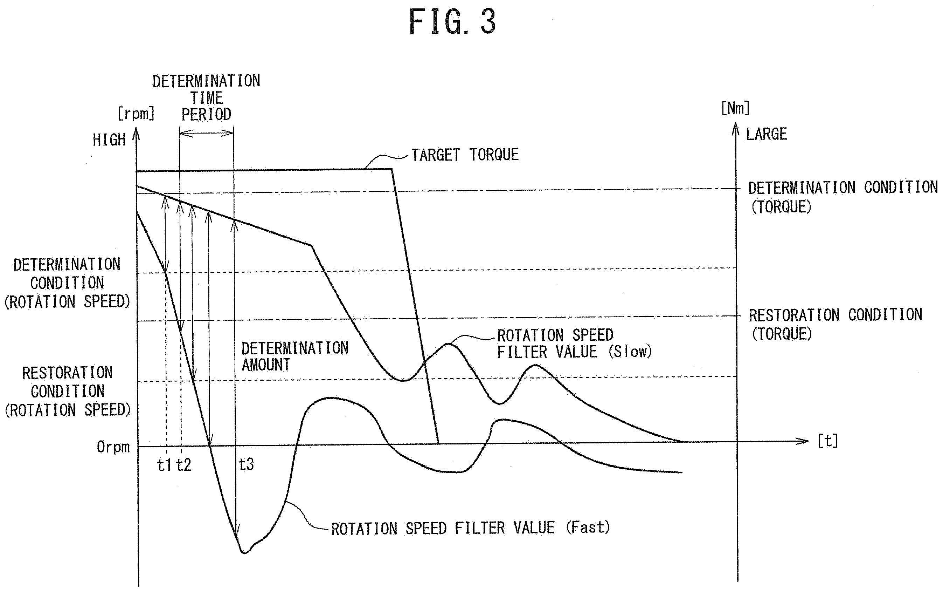

Operation of such a motor output control process will be described with reference to Figure 3.

At time t1, the rotation speed of the motor 4 filtered by the filter with quick responsiveness falls below the rotation speed of the determination condition and the torque of the motor 4 is equal to or greater than the torque of the determination condition, and so the determination condition is met and a determination of the amount of change in the rotation speed of the motor starts.

At time t2, the amount of change in the rotation speed of the motor is equal to or greater than a determination threshold, and at time t3, a state in which the amount of change in the rotation speed of the motor is equal to or greater than the determination threshold continues for a determination time period, and so the output of the motor 4 is restricted.

Thus, in the present embodiment, when it is detected that the rotation speed of the motor 4 decreases by a predetermined rate of change or more, the control unit 6 restricts the torque of the motor 4.

When it is detected that the rotation speed of the motor 4 decreases by a predetermined rate of change or more, there is a high possibility that the rotation speed of the motor 4 will be in a low rotation area, and a motor lock is more likely to occur.

Thus, by predicting a motor lock and reducing the torque of the motor 4, it is possible to prevent a motor lock state and protect the switching element of the inverter 5 from a sudden temperature rise.

The control unit 6 includes a filter to correct the rotation speed of the motor 4 and restricts the torque of the motor 4 when a difference between the rotation speed of the motor 4 and a value of the rotation speed of the motor 4 corrected by the filter exceeds a predetermined value.

If the changed rotation speed of the motor 4 is used for a determination as is, an erroneous determination may occur. The value of the rotation speed of the motor 4 corrected by the filter may not produce a large difference from the rotation speed of the motor 4 during normal running, but if the rotation speed suddenly changes, the difference will increase.

When there is a large difference between the rotation speed of the motor 4 and the value of the rotation speed of the motor 4 corrected by the filter, by restricting the torque of the motor 4 using such characteristics, it is possible to protect the switching element from a sudden temperature rise while preventing an erroneous determination.

The control unit 6 includes a first filter and a second filter that is less responsive than the first filter and restricts the torque of the motor 4 when an amount of change in the rotation speed of the motor, which is a difference between a value of the rotation speed of the motor 4 corrected by the first filter and a value of the rotation speed of the motor 4 corrected by the second filter, is equal to or greater than a predetermined determination threshold.

Although no large divergence is generated between values of the two filters during normal running, if the number of revolutions of the motor 4 suddenly changes, a large divergence is generated between values of the two filters.

Thus, by determining whether the difference between the values corrected by the two filters is equal to or greater than a predetermined value, it is possible to reduce the torque of the motor 4 by anticipating that the rotation speed of the motor 4 will be in a low rotation area and protect the switching element from a sudden temperature rise.

For example, the first filter is a filter that changes at substantially the same speed as the speed of an angle sensor used for motor torque control and is used for a motor lock determination or the like. Sudden deceleration can also be detected by the first filter only, but the values change suddenly and there will be many erroneous determinations, and so erroneous determinations are prevented using a difference between the two filters.

Although a case has been described in the present embodiment where the control unit 6 performs various determinations and calculations based on various sensor information, without being limited to this, the hybrid vehicle 1 may be provided with a communication unit that can communicate with an external apparatus such as an external server, the external apparatus may perform various determinations and calculations based on detection information of various sensors transmitted from the communication unit, the communication unit may receive the determination results or calculation results, and various kinds of control may be performed using the received determination results and calculation results.

The embodiment of the present invention has been disclosed but it is obvious that those skilled in the art can add changes without departing from the scope of the present invention as defined in the appended claim. All such corrections and equivalents are intended to be included in the following claims.

### [Reference Signs List]

1...hybrid vehicle, 2...engine, 4...motor, 5...inverter, 6...control unit, 41...rotation sensor (rotation speed detection unit), 51...current sensor

## Claims

1. A control device for a hybrid vehicle (1) comprising an engine (2), a motor (4), an inverter (5) that supplies AC electric power to the motor (4) using a switching element, and a rotation speed detection unit (41) that detects a rotation speed of the motor (4), **characterized by**
a control unit (6) comprising a first filter and a second filter, each configured to correct the rotation speed, the second filter being less responsive than the first filter, wherein the control unit (6) is configured to calculate an amount of change in the rotation speed which is a difference between the corrected rotation speeds,
the control unit (6) being configured to:
start to determine whether the amount of change is equal to or greater than a predetermined value, when the corrected rotation speed by the first filter falls below a predetermined rotation speed and a torque of the motor (4) is equal to or greater than a predetermined motor torque; and
restrict the torque of the motor (4) upon continuing to determine, for a predetermined time period, that the amount of change is equal to or greater than the predetermined value.

## Patentansprüche

1. Eine Steuervorrichtung für ein Hybridfahrzeug (1) mit einem Verbrennungsmotor (2), einem Motor (4), einem Wechselrichter (5), der den Motor (4) unter Verwendung eines Schaltelements mit elektrischer Wechselspannung versorgt, und einer Drehzahlerfassungseinheit (41), die eine Drehzahl des Motors (4) erfasst, **gekennzeichnet durch**
eine Steuereinheit (6), die einen ersten Filter und einen zweiten Filter aufweist, die jeweils konfiguriert sind, um die Drehgeschwindigkeit zu korrigieren, wobei der zweite Filter weniger empfindlich ist als der erste Filter, wobei die Steuereinheit (6) konfiguriert ist, um einen Betrag einer Änderung der Drehgeschwindigkeit zu berechnen, der eine Differenz zwischen den korrigierten Drehgeschwindigkeiten ist,
die Steuereinheit (6) konfiguriert ist, um:
zu beginnen, zu bestimmen, ob der Betrag der Änderung gleich oder größer als ein vorbestimmter Wert ist, wenn die korrigierte Drehgeschwindigkeit durch den ersten Filter unter eine vorbestimmte Drehgeschwindigkeit fällt und ein Drehmoment des Motors (4) gleich oder größer als ein vorbestimmtes Motordrehmoment ist; und
das Drehmoment des Motors (4) zu begrenzen, wenn für eine vorbestimmte Zeitdauer weiterhin festgestellt wird, dass der Betrag der Änderung gleich oder größer als der vorbestimmte Wert ist.

## Revendications

1. Dispositif de commande pour un véhicule hybride (1) comprenant un moteur (2), un moteur électrique (4), un onduleur (5) qui fournit une énergie électrique CA au moteur électrique (4) à l'aide d'un élément de commutation, et une unité de détection de vitesse de rotation (41) qui détecte une vitesse de rotation du moteur électrique (4), **caractérisé par**
une unité de commande (6) comprenant un premier filtre et un deuxième filtre, chacun configuré pour corriger la vitesse de rotation, le deuxième filtre étant moins réactif que le premier filtre, dans lequel l'unité de commande (6) est configurée pour calculer une quantité de changement de la vitesse de rotation qui est une différence entre les vitesses de rotation corrigées,
l'unité de commande (6) étant configurée pour :
commencer à déterminer si la quantité de changement est supérieure ou égale à une valeur prédéterminée, lorsque la vitesse de rotation corrigée par le premier filtre passe en dessous d'une vitesse de rotation prédéterminée et qu'un couple du moteur électrique (4) est supérieur ou égal à un couple moteur prédéterminé ; et
restreindre le couple du moteur électrique (4) en continuant à déterminer, pendant une période prédéterminée, que la quantité de changement est supérieure ou égale à la valeur prédéterminée.
